# EUROPÄISCHE PATENTANMELDUNG

(11) **EP 2 862 669 A2**
(43) Veröffentlichungstag der Anmeldung: **22.04.2015**
(21) Anmeldenummer: 14188827.1
(22) Anmeldetag: 14.10.2014
(51) Int. Cl.: B23Q 3/06, B23Q 5/34, B25B 1/00, B23Q 39/04

(54) **Verstellbarer Werkstückträger**

(30) Priorität: 17.10.2013 DE 102013017219
(71) Anmelder: Phoenix Contact GmbH & Co. KG, 32825 Blomberg (DE)
(72) Erfinder: Capelle, Friedrich, 32825 Blomberg (DE); Grabbe, Wilhelm, 32657 Lemgo (DE)
(74) Vertreter: Janke, Christiane

(57) **Zusammenfassung**

Ein Werkstückträger zum Tragen eines Werkstücks umfasst einen Grundkörper und zwei Klemmbacke, die jeweils einen Klemmabschnitt aufweisen, wobei die Klemmabschnitte der Klemmbacken entlang einer Klemmrichtung mit einem Abstand voneinander beabstandet sind und zwischen sich einen Zwischenraum ausbilden, in dem ein Werkstück zum Tragen an dem Werkstückträger anordbar ist. Zusätzlich ist mindestens eine Antriebseinrichtung (23, 24) vorgesehen, die ausgebildet ist, mindestens eine der Klemmbacken (21, 22) motorisch entlang der Klemmrichtung (K) zum Einstellen des Abstands (A) zwischen den Klemmabschnitten (212, 222) zu verstellen. Auf diese Weise wird ein Werkstückträger zur Verfügung gestellt, der in variabler Weise einsetzbar ist zum Tragen unterschiedlich gearteter Werkstücke, ohne dass zur Anpassung an ein bestimmtes Werkstück ein Austausch von Teilen des Werkstückträgers erforderlich ist.

## Beschreibung

Die Erfindung betrifft einen Werkstückträger zum Tragen eines Werkstücks nach dem Oberbegriff des Anspruchs 1.

Ein derartiger Werkstückträger kann beispielsweise in einer Montageanlage zum Einsatz kommen und dazu dienen, ein Werkstück von einer Montageeinrichtung zu einer anderen Montageeinrichtung zu befördern. Ein solcher Werkstückträger umfasst hierbei einen Grundkörper, an dem (direkt oder indirekt) zwei Klemmbacken angeordnet sind, die jeweils einen Klemmabschnitt aufweisen. Die Klemmabschnitte sind entlang einer Klemmrichtung mit einem Abstand zueinander beabstandet und bilden zwischen sich einen Zwischenraum aus, in dem ein Werkstück zum Tragen an dem Werkstückträger in klemmender Weise angeordnet werden kann. Ein an dem Werkstückträger gehaltenes Werkstück kann somit durch Bewegen des Werkstückträgers von einem Ort zu einem anderen Ort, beispielsweise von einer Montageeinrichtung zu einer anderen Montageeinrichtung, befördert werden, um auf diese Weise beispielsweise in einer Montageanlage an unterschiedlichen Einrichtungen unterschiedliche Montageschritte durchzuführen.

Bei einem aus der DE 100 48 255 B4 bekannten Werkstückträger einer Transportvorrichtung sind Klemmabschnitte in Form von Klinkenleisten jeweils federnd an einem Grundkörper angeordnet. Zwischen diesen federelastisch verstellbaren Klinkenleisten können ein oder mehrere Werkstücke gehalten werden, um durch Verschieben des Werkstückträgers entlang einer Transportrichtung die Werkstücke zu transportieren.

Bei solchen Werkstückträgern kann herkömmlich eine federelastische Anordnung von Klemmabschnitten ermöglichen, Werkstücke mit in gewissem Umfang unterschiedlichen Abmessungen an dem Werkstückträger klemmend zu halten. Abhängig von den äußeren Abmessungen eines Werkstücks werden hierbei die Klemmabschnitte elastisch verspannt. Ein elastisches Verstellen solcher Klemmabschnitte ist jedoch nur in sehr begrenztem Umfang möglich, bedingt dadurch, dass ein elastischer Verstellweg eines solchen Klemmabschnitts begrenzt ist. Sollen Werkstücke mit ganz anderen Abmessungen, die an den vorhandenen Klemmabschnitten nicht gehalten werden können, an einem Werkstückträger transportiert werden, so erfordert dies einen Austausch von Teilen des Werkstückträgers oder einen Austausch des Werkstückträgers insgesamt. Ein solcher Austausch ist aufwändig, weil er Zeit in Anspruch nimmt. Zudem ist in einer Montageanlage häufig eine Vielzahl von Werkzeugträgern vorhanden, die in einem solchen Fall gegebenenfalls sämtlich ausgetauscht werden müssten, was in wirtschaftlich akzeptabler Zeit nicht möglich ist.

Aufgabe der vorliegenden Erfindung ist es, einen Werkstückträger zur Verfügung zu stellen, der in variabler Weise einsetzbar ist zum Tragen unterschiedlich gearteter Werkstücke, ohne dass zur Anpassung an ein bestimmtes Werkstück ein Austausch von Teilen des Werkstückträgers erforderlich ist.

Diese Aufgabe wird durch einen Gegenstand mit den Merkmalen des Anspruchs 1 gelöst.

Demnach umfasst der Werkstückträger mindestens eine Antriebseinrichtung, die ausgebildet ist, mindestens eine der Klemmbacken motorisch entlang der Klemmrichtung zum Einstellen des Abstands zwischen den Klemmabschnitten zu verstellen.

Dies geht von dem Gedanken aus, mindestens eine der an dem Werkstückträger vorgesehenen Klemmbacken motorisch verstellbar zu machen, so dass durch motorische Verstellung des an der Klemmbacke angeordneten Klemmabschnitts der Abstand zwischen dem Klemmabschnitt und dem Klemmabschnitt der anderen Klemmbacke verändert werden kann. Auf diese Weise kann die Weite des zwischen den Klemmabschnitten gebildeten Zwischenraums, in dem ein Werkstück klemmend gehalten werden soll, angepasst und auf die Abmessungen eines Werkstücks abgestimmt werden, so dass der Werkstückträger durch Verstellen des Klemmabschnitts zumindest einer Klemmbacke einem Werkstück angepasst werden kann.

Vorzugsweise weist der Werkstückträger hierbei zwei Antriebseinrichtungen auf, die jeweils zum motorischen Verstellen eines Klemmabschnitts einer der Klemmbacken dienen. Eine erste Antriebseinrichtung treibt somit die erste Klemmbacke an, während eine zweite Antriebseinrichtung die zweite Klemmbacke bewegt.

Die Antriebseinrichtungen sind hierbei vorzugsweise so ausgestaltet, dass die Klemmabschnitte der Klemmbacken unabhängig voneinander bewegt werden können. Durch entgegengesetztes Bewegen der Klemmabschnitte kann auf diese Weise der Abstand zwischen den Klemmabschnitten vergrößert oder verkleinert werden, um die Weite des zwischen den Klemmabschnitten gebildeten Zwischenraums zu verändern und einem bestimmten Werkstück anzupassen.

Möglich ist dann auch, die Klemmabschnitte in gleichgerichteter Weise zu bewegen, so dass der Abstand zwischen den Klemmabschnitten nicht verändert wird, sich aber die Lage der Klemmabschnitte und somit eines zwischen den Klemmabschnitten gehaltenen Werkstücks verändert.

Dadurch, dass zumindest eine der Klemmbacken motorisch verstellt werden kann, wird auch möglich, durch motorisches Verstellen ein Werkstück klemmend zu greifen und anschließend wieder loszulassen. Für ein Aufnehmen eines Werkstücks in dem Werkstückträger und/oder für ein Loslassen des Werkstücks zum Entfernen des Werkstücks aus dem Werkstückträger werden somit keine zusätzlichen Einrichtungen benötigt. Dies kann durch Verstellen einer oder beider der Klemmbacken erfolgen.

Die Antriebseinrichtungen umfassen vorzugsweise jeweils einen an dem Grundkörper angeordneten Antriebsmotor in Form eines Elektromotors. Jeder der Antriebsmotoren ist vorzugsweise über ein Verstellgetriebe mit einer der Klemmbacken gekoppelt, wobei das Verstellgetriebe beispielsweise als Schneckengetriebe ausgestaltet und vorzugsweise selbsthemmend ist. Dies hat den Vorteil, dass nach einem Verstellen einer Klemmbacke die Klemmbacke auch in stromlosen Zustand des Antriebsmotors ihre Position beibehält und auf ein Werkstück wirkende Kräfte sowie auch die zum Halten des Werkstücks an den Klemmabschnitten erforderlichen Klemmkräfte nicht zu einem Verstellen der Klemmbacken zueinander führen.

In einer konkreten Ausgestaltung kann das Verstellgetriebe beispielsweise als Schneckengetriebe ausgestaltet sein, das selbsthemmend ist. Der Antriebsmotor kann hierbei eine Antriebswelle antreiben, die über eine Schnecke mit einem Schneckenrad eines Exzenters in Eingriff steht. Durch Antreiben der Antriebswelle kann der Exzenter verdreht werden, wobei der Exzenter beispielsweise mit einem exzentrischen Kopf auf eine zugeordnete Klemmbacke einwirkt und dadurch die Klemmbacke entlang der Klemmrichtung verstellt.

Grundsätzlich ist möglich, dass eine Antriebswelle einen Exzenter antreibt und über den einen Exzenter zum Verstellen auf eine zugeordnete Klemmbacke einwirkt. Denkbar und möglich ist aber auch, dass mit einer Antriebswelle zwei drehbare Exzenter gekoppelt sind, indem die Antriebswelle über zwei Schnecken mit Schneckenrädern zweier drehbarer Exzenter in Eingriff steht, wobei durch Verdrehen der Antriebswelle die Exzenter in synchroner Weise zum Verstellen einer zugeordneten Klemmbacke bewegt werden können.

Im Sinne der vorliegenden Erfindung ist zumindest eine der Klemmbacken motorisch entlang einer Klemmrichtung verstellbar und kann somit translatorisch bewegt werden. Zusätzlich kann vorgesehen sein, dass der Klemmabschnitt einer oder beider Klemmbacken federelastisch mit einem Verstellkörper der zugeordneten Klemmbacke verbunden ist, so dass der Klemmabschnitt federnd an dem Verstellkörper gehalten ist. Eine solche federelastische Anordnung eines oder beider der Klemmabschnitte ermöglicht ein Werkstück zwischen den Klemmabschnitten anzuordnen, ohne dass hierfür die Klemmabschnitte voneinander entfernt und nach Einbringen des Werkstücks in den zwischen den Klemmabschnitten gebildeten Zwischenraum wieder einander angenähert werden müssen. Vielmehr kann ein Werkstück zwischen die Klemmabschnitte eingesetzt werden, wobei einer oder beide der Klemmabschnitte federnd ausweichen und das Werkstück somit zwischen sich aufnehmen können.

Zum erleichterten Einsetzen eines Werkstücks kann zusätzlich an einem Klemmabschnitt einer Klemmbacke oder an beiden Klemmabschnitten beider Klemmbacken eine Fase zur Ausbildung einer Einführschräge ausgebildet sein, die ein Auflaufen eines Werkstücks und ein federndes Beiseitedrängen eines oder beider Klemmabschnitte ermöglicht.

Dadurch, dass bei federnder Ausgestaltung eines oder beider Klemmabschnitte die Klemmabschnitte zum Ansetzen eines Werkstücks nicht zueinander motorisch verstellt werden müssen, kann ein Bestückungsvorgang, also ein Ansetzen eines Werkstücks an einen Werkzeugträger, sehr schnell erfolgen, so dass sich kurze Bestückungszeiten realisieren lassen.

Zusätzlich kann vorgesehen sein, nach einem Bestückungsvorgang, also nach einem Ansetzen eines Werkstücks an den Werkstückträger durch Einführen zwischen die Klemmabschnitte, die Haltekraft, mit der das Werkstück an dem Werkstückträger gehalten wird, durch (geringfügiges) Verstellen der Klemmabschnitte zueinander anzupassen. Nach einem Ansetzen eines Werkstücks kann somit eine Haltekraft in gezielter, geregelter Weise eingestellt werden.

In einer weiteren Ausgestaltung weist der Werkstückträger ein Rahmenteil auf, an dem der Grundkörper des Werkstückträgers um eine erste Drehachse rotierbar angeordnet ist. Das Rahmenteil des Werkstückträgers kann beispielswese fest mit einem Transportelement, beispielsweise einem Drehteller, einer Montageanlage verbunden sein, wobei der Grundkörper um die erste Drehachse relativ zu dem Rahmenteil verschwenkt werden kann. Auf diese Weise kann die Position eines Werkstücks an dem Werkstückträger verändert werden, so dass beispielsweise eine Unterseite und eine Oberseite des Werkstücks zugänglich gemacht werden können.

Zum Verstellen des Grundkörpers relativ zu dem Rahmenteil ist vorzugsweise ein Verstellgetriebe vorgesehen, dass eine mit dem Grundkörper verbundene Welle aufweist. Durch Verdrehen der Welle um die erste Drehachse kann der Grundkörper relativ zu dem Rahmenteil verdreht werden, wobei die Welle beispielsweise ein Schneckenrad aufweist, das mit einer Schnecke einer motorisch verstellbaren Verstellwelle in Eingriff steht und über die Verstellwelle zum Rotieren des Grundkörpers mit den daran angeordneten Klemmbacken verstellt werden kann.

An der Welle, über die der Grundkörper rotierbar an dem Rahmenteil angeordnet ist, kann beispielsweise auch ein Anschlusskabel hin zu dem Grundkörper geführt werden. Hierzu kann an der Welle ein Führungskanal ausgebildet sein, der beispielsweise als längs entlang der Drehachse erstreckte Nut in die Welle eingeformt oder als längserstreckte Bohrung ausgebildet sein kann. Durch den Führungskanal hindurch kann ein Anschlusskabel von außen hin zum Grundkörper des Werkstückträgers geführt werden, wobei bei einem Verdrehen der Welle der daran angeordnete Grundkörper und auch das Anschlusskabel zusammen mit der Welle verdreht werden. Ist vorgesehen, dass der Grundkörper nicht über einen vorbestimmten Winkel hinaus um die zugeordnete erste Drehachse in die eine Richtung oder die andere Richtung verschwenkt werden kann (beispielsweise 180° in die eine Richtung und 180° in die andere Richtung), so ist sichergestellt, dass bei Rotieren des Grundkörpers ein übermäßiges Verdrillen des Anschlusskabels vermieden ist.

Eine Anlage, insbesondere eine Montageanlage, umfasst vorzugsweise einen Werkstückträger nach der vorangehend beschriebenen Art und ein Transportelement. Das Transportelement kann beispielsweise als Drehteller ausgestaltet sein, an dem eine Mehrzahl von Werkstückträgern umfänglich zueinander beabstandet angeordnet sind. Das Transportelement ist zu einer feststehenden Basis bewegbar, so dass durch Bewegen des Transportelements die Position der an dem Transportelement angeordneten Werkstückträger verändert werden kann.

Ist das Transportelement als um eine zweite Drehachse drehbarer Drehteller ausgestaltet, so ist die zweite Drehachse ist beispielsweise quer zur ersten Drehachse des Grundkörpers des Werkstückträgers gerichtet. Grundsätzlich ist die Lagebeziehung der ersten Drehachse des Grundkörpers und der zweiten Drehachse des Transportelements aber beliebig. Beispielsweise ist auch denkbar, dass die erste Drehachse und die zweite Drehachse parallel zueinander ausgerichtet sind.

Das Verdrehen des Grundkörpers kann hierbei beispielsweise über eine an der Basis angeordnete Verstelleinrichtung erfolgen, die lediglich in mindestens einer vorbestimmten Stellung des Transportelements mechanisch mit dem dem Grundkörper zugeordneten Verstellgetriebe in koppelnde Wirkverbindung gelangt. Hierhinter steckt der Gedanke, an der (feststehenden) Basis eine oder mehrere Verstelleinrichtungen vorzusehen, die zum Verstellen des Werkstückträgers, insbesondere zum rotierenden Verstellen des Grundkörpers des Werkstückträgers, an bestimmten Positionen des Transportelements relativ zur Basis dienen. So kann das Transportelement beispielsweise in eine vorbestimmte Stellung verfahren werden, in der die an der Basis angeordnete Verstelleinrichtung mit einem Verstellgetriebe in Eingriff gelangt, über das der Grundkörper verstellt werden kann. Über die motorische Verstelleinrichtung der Basis kann dann der Grundkörper in seiner Stellung angepasst werden, wobei bei weiterem Bewegen des Transportelements aus der vorbestimmten Stellung heraus die Kopplung zwischen der Verstelleinrichtung und dem Verstellgetriebe des Grundkörpers aufgehoben wird. Ist das Verstellgetriebe, das dem Grundkörper zugeordnet ist, selbsthemmend ausgebildet, behält der Grundkörper seine eingestellte Position bei, bis das Transportelement wiederum in eine vorbestimmte Stellung verfahren wird, in der eine Verstelleinrichtung mit dem Verstellgetriebe des Grundkörpers für ein weiteres Verstellen des Grundkörpers in Eingriff gelangt.

Die Kopplung der Verstelleinrichtung an der Basis mit dem an dem Transportelement angeordneten Verstellgetriebe des Grundkörpers kann beispielsweise über einen Koppelantrieb der Verstelleinrichtung erfolgen, der einen Verstellantrieb entlang einer Verstellrichtung verstellt, um eine Abtriebswelle des Verstellantriebs koppelnd mit einer Verstellwelle des Verstellgetriebes des Grundkörpers auf Seiten des Transportelements in Eingriff zu bringen.

Zusätzlich oder alternativ kann die Basis auch eine elektrische Verbindungseinrichtung aufweisen, die in mindestens einer vorbestimmten Stellung des Transportelements elektrisch mit dem Werkstückträger zur elektrischen Versorgung der mindestens einen Antriebseinrichtung und/oder zur Übertragung von Steuer- oder Sensorsignalen verbunden ist. Über die elektrische Verbindungseinrichtung der Basis kann somit an vorbestimmten Stellungen des Transportelements eine elektrische Ankopplung des an dem Transportelement angeordneten Werkstückträgers vorgenommen werden, um in diesen vorbestimmten Stellungen beispielsweise eine elektrische Versorgung zum Bestromen der an dem Werkstückträger angeordneten Antriebsvorrichtungen oder eine Übertragung von Steuerbefehlen oder Sensorsignalen zu ermöglichen. Die elektrische Verbindungseinrichtung ist hierbei ortsfest an der Basis angeordnet, während sich das Transportelement relativ zu der Basis bewegt. Nur in ganz bestimmten Stellungen wird eine elektrische Verbindung zwischen der elektrischen Verbindungseinrichtung und dem Werkstückträger hergestellt, so dass nur in diesen vorbestimmten Stellungen beispielsweise ein Bestromen der an dem Werkstückträger angeordneten Antriebseinrichtungen erfolgen kann.

Für ein elektrisches Verbinden der an der Basis angeordneten elektrischen Verbindungseinrichtung mit dem Werkstückträger können an dem Transportelement und der elektrischen Verbindungseinrichtung jeweils ein Kontaktblock vorgesehen sein, die in einer vorbestimmten Stellung kontaktierend miteinander in Verbindung gebracht werden können. Beispielsweise kann die elektrische Verbindungseinrichtung einen Koppelantrieb aufweisen, der den Kontaktblock der elektrischen Verbindungseinrichtung zum elektrischen Verbinden mit dem Kontaktblock auf Seiten des Transportelements verstellen kann, so dass bei Anfahren einer vorbestimmten Stellung die Kontaktblöcke in kontaktierender Weise miteinander in Verbindung gebracht werden können und somit eine elektrische Verbindung hergestellt wird.

Der Gedanke einer ortsfest an der Basis angeordneten Verstelleinrichtung oder einer ortsfest an der Basis angeordneten elektrischen Verbindungseinrichtung stellt auch einen eigenständigen Aspekt dar.

Beispielsweise kann eine Anlage, insbesondere Montageanlage, allgemein eine Basis, ein relativ zu der Basis bewegbares Transportelement und einen an dem Transportelement angeordneten, relativ zum Transportelement verstellbaren Werkstückträger zum Tragen eines Werkstücks umfassen. Dabei kann vorgesehen sein, dass die Basis eine motorische Verstelleinrichtung aufweist, die in mindestens einer vorbestimmten Stellung des Transportelements mechanisch mit dem Werkstückträger zum motorischen Verstellen des Werkstückträgers gekoppelt ist, nicht aber in anderen Stellungen als der mindestens einen vorbestimmte Stellung.

Zur Erläuterung soll auf das vorangehend Ausgeführte verwiesen werden, das analog auch auf eine solche Anlage Anwendung finden kann.

Eine andere Anlage, insbesondere Montageanlage, kann allgemein eine Basis, ein relativ zu der Basis bewegbares Transportelement und eine an dem Transportelement angeordnete elektrische Einrichtung umfassen. Dabei kann vorgesehen sein, dass die Basis eine elektrische Verbindungseinrichtung aufweist, die in mindestens einer vorbestimmten Stellung des Transportelements mit der elektrischen Einrichtung zur elektrischen Versorgung der elektrischen Einrichtung und/oder zur Übertragung von Steuer- oder Sensorsignalen verbunden ist, nicht aber in anderen Stellungen als der mindestens einen vorbestimmten Stellung.

Bei einer solchen elektrischen Einrichtung kann es sich beispielsweise um einen elektromotorisch zu verstellenden Werkzeugträger handeln. Aber auch eine ganz anders geartete elektrische Einrichtung, beispielsweise eine Steuereinrichtung oder eine Sensoreinrichtung, die an dem Transportelement angeordnet sind, kann auf diese Weise mit einer ortsfest an der Basis angeordneten elektrischen Verbindungseinrichtung in Verbindung treten, um auf diese in vorbestimmten Stellungen des Transportelements relativ zu der Basis eine Übertragung von elektrischen Signalen zu ermöglichen.

Ist die elektrische Einrichtung als Werkstückträger mit daran angeordneten Antriebseinrichtungen zum Verstellen von Klemmbacken des Werkstückträgers ausgebildet, so kann es sich bei den Sensorsignalen beispielsweise um so genannte Encodersignale handeln, die eine Drehposition einer Antriebseinrichtung anzeigen.

Ansonsten soll auf das vorangehend Erläuterte verwiesen werden, das analog auch auf eine solche Anlage Anwendung finden kann.

Der der Erfindung zugrunde liegende Gedanke soll nachfolgend anhand der in den Figuren dargestellten Ausführungsbeispiele näher erläutert werden. Es zeigen:
- Fig. 1: eine schematische Darstellung einer Montageanlage mit einem Transportelement und daran angeordneten Werkstückträgern;
- Fig. 2A: eine Ansicht eines Werkstückträgers an einem Transportelement, mit einem Grundkörper in einer ersten Drehstellung;
- Fig. 2B: eine Ansicht des Werkstückträgers, mit dem Grundkörper in einer zur ersten Drehstellung um 180° verdrehten, zweiten Drehstellung;
- Fig. 3A: eine erste Schnittansicht durch den Grundkörper des Werkstückträgers mit daran angeordneten Klemmbacken;
- Fig. 3B: eine zweite Schnittansicht durch den Grundkörper entlang der Linie A-A gemäß Fig. 3A;
- Fig. 4A: eine andere Ansicht des Werkstückträgers an dem Transportelement;
- Fig. 4B: die Ansicht gemäß Fig. 4A, jedoch ohne das Transportelement;
- Fig. 5: eine wiederum andere Ansicht des Werkstückträgers an dem Transportelement; und
- Fig. 6: eine gesonderte Ansicht des Werkstückträgers.

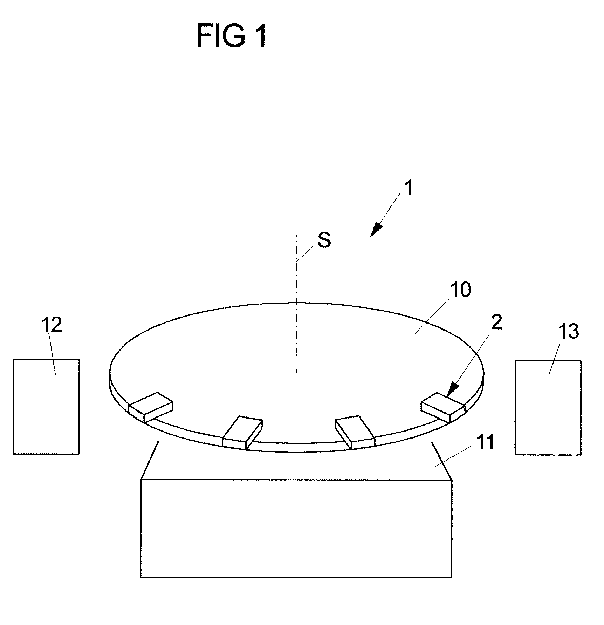

Fig. 1 zeigt in einer schematischen Ansicht eine Montageanlage 1, bei der ein Transportelement 10 nach Art eines Drehtellers um eine Drehachse S drehbar an einer Basis 11 angeordnet ist. An dem Transportelement 10 ist eine Mehrzahl von Werkstückträgern 2 angeordnet, an denen Werkstücke gehalten und zusammen mit dem Transportelement 10 um die Drehachse S bewegt werden können. Auf diese Weise können an den Werkstückträgern 2 gehaltene Werkstücke beispielsweise von einer ersten Montageeinrichtung 12 hin zu einer zweiten Montageeinrichtung 13 bewegt werden, um auf diese Weise an einem Werkstück unterschiedliche Montageschritte durchzuführen.

Das Transportelement 10 kann grundsätzlich auch als translatorisch oder entlang einer sonstigen Bewegungsbahn zu bewegendes Element ausgestaltet sein und ist nicht notwendigerweise als Drehteller ausgebildet.

Eine solche Montageanlage 1 kann Bestandteil einer Fertigungsstraße sein, bei der an unterschiedlichen Stationen unterschiedliche Schritte zur Herstellung, Montage und Komplettierung eines Werkstücks durchgeführt werden.

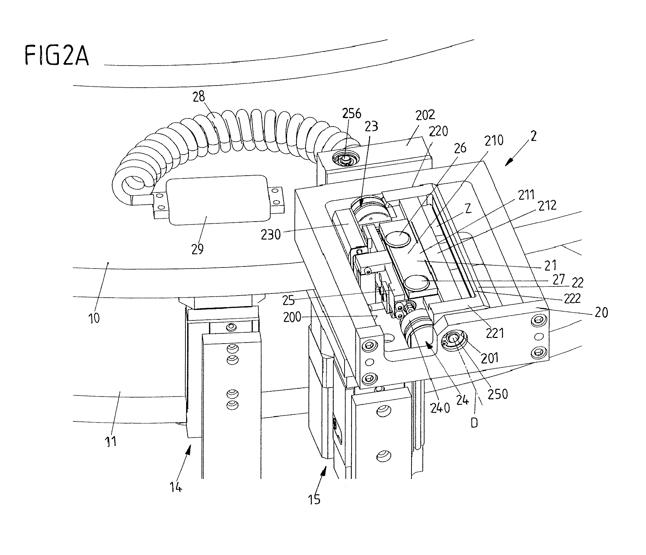

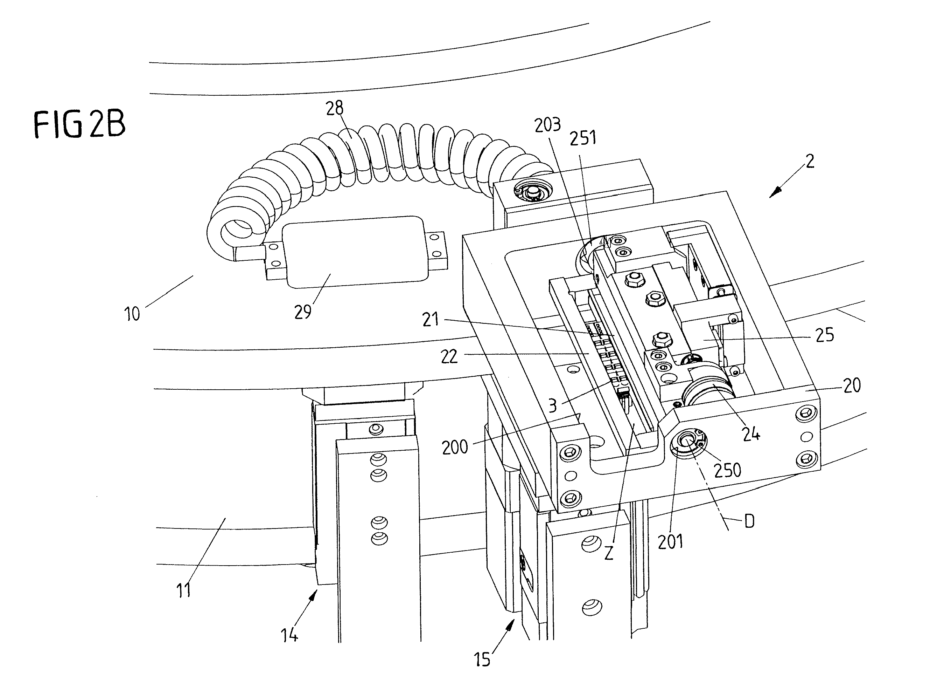

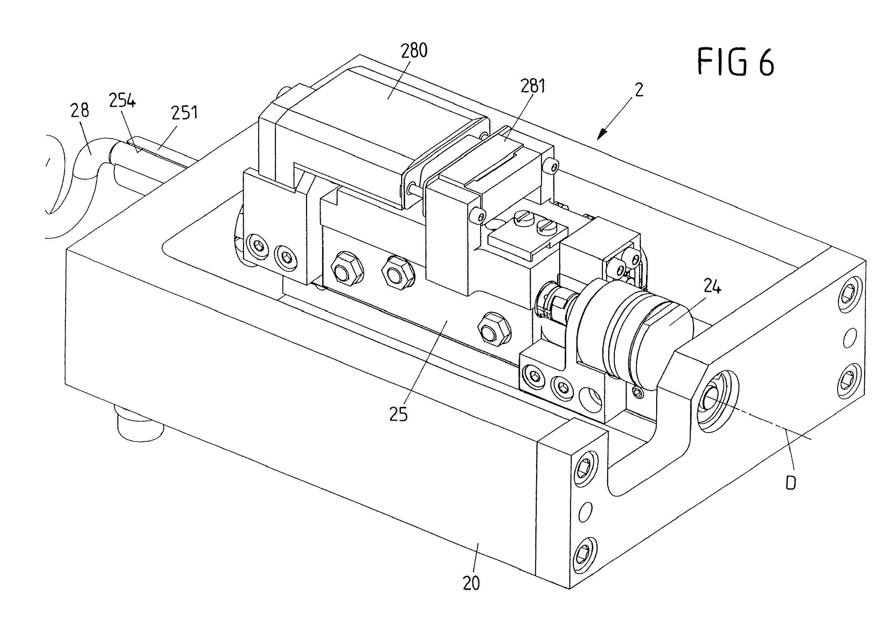

Ein Ausführungsbeispiel eines solchen Werkstückträgers 2 zeigen Fig. 2A, 2B bis 6.

Der Werkstückträger 2 weist, wie beispielsweise in Fig. 2A und 2B dargestellt, ein Rahmenteil 20 in Form eines umlaufenden, umfänglich geschlossenen Rahmenteils 20 auf, über den der Werkstückträger 2 an dem Transportelement 10 in Form des Drehtellers montiert, beispielsweise mit dem Transportelement 10 verschraubt ist. An dem Rahmenteil 20 ist in einer Rahmenöffnung 200 ein Grundkörper 25 angeordnet, der mit einem Zapfen 250 an einer Lagerstelle 201 des Rahmenteils 20 und über eine Welle 251 an einer gegenüberliegenden Lagerstelle 203 des Rahmenteils 20 um eine Drehachse D rotierbar angeordnet ist.

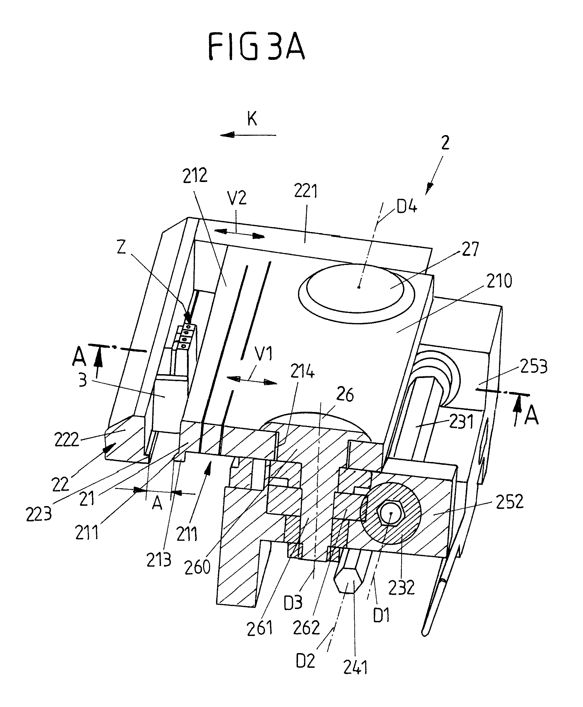

An dem Grundkörper 25 sind zwei Klemmbacken 21, 22 angeordnet, die zwischen sich entlang einer Klemmrichtung K einen Abstand A aufweisen (siehe z. B. Fig. 3A) und somit einen Zwischenraum Z ausbilden, in dem ein Werkstück 3 in klemmender Weise gehalten werden kann.

Die Klemmbacken 21, 22 sind entlang der Klemmrichtung K an dem Grundkörper 25 mechanisch geführt.

Eine erste, innere Klemmbacke 21 weist einen Verstellkörper 210 auf, der über eine Federeinrichtung 211 federelastisch mit einem Klemmabschnitt 212 nach Art einer Klemmleiste verbunden ist. Über die Federeinrichtung 211, die beispielsweise durch schlitzartige Öffnungen in dem die Klemmbacke 21 ausbildenden Bauteil und somit durch lokale Materialschwächung hergestellt sein kann, ist der Klemmabschnitt 212 federelastisch an dem Verstellkörper 210 gehalten.

Eine zweite, äußere Klemmbacke 22 umgreift die erste, innere Klemmbacke 21 mit seitlichen Armen 220, 221 (siehe z. B. Fig. 2A), die über einen Klemmabschnitt 222 nach Art einer Klemmleiste miteinander verbunden sind. Über die Arme 220, 221 ist der Klemmabschnitt 222 mit dem Grundkörper 25 verbunden, wobei der Klemmabschnitt 222 der zweiten Klemmbacke 22 parallel zum Klemmabschnitt 212 der ersten Klemmbacke 21 erstreckt ist und somit ein längserstreckter Zwischenraum Z zum Aufnehmen des Werkstücks 3 zwischen den Klemmabschnitten 212, 222 geschaffen wird.

Den Klemmbacken 21, 22 ist jeweils eine Antriebseinrichtung 23, 24 zugeordnet, über die die Klemmbacken 21, 22 jeweils entlang der Klemmrichtung K relativ zum Grundkörper 25 verstellt werden können.

Eine erste Antriebseinrichtung 23 ist hierbei der ersten, inneren Klemmbacke 21 zugeordnet und weist einen Antriebsmotor 230 in Form eines Elektromotors auf, der eine Antriebswelle 231 (siehe Fig. 3A) antreibt. Die Antriebswelle 231 ist drehfest verbunden mit zwei in Lagerstellen 252, 253 des Grundkörpers 25 drehbar gelagerten Schnecken 232 (von denen in Fig. 3A lediglich eine vordere Schnecke 232 sichtbar ist). Über die Schnecken 232 steht die Antriebswelle 231 mit Getrieberädern 262 in Form von Schneckenrädern zweier Exzenter 26, 27 in Eingriff, wobei die Schneckenräder 262 jeweils drehfest in einem Schaft 261 des zugeordneten Exzenters 26, 27 angeordnet sind (in der Schnittansicht gemäß Fig. 3A ist dies für den vorderen Exzenter 26 ersichtlich). Die Exzenter 26, 27 sind jeweils um eine Drehachse D3, D4 drehbar in dem Grundkörper 25 gelagert und liegen mit einem Kopf 260 in einer zugeordneten Öffnung 214 des Verstellkörpers 210 der ersten, inneren Klemmbacke 21 ein (wiederum in Fig. 3A nur für den vorderen Exzenter 26 sichtbar).

Durch Verdrehen der Antriebswelle 231, die um eine Drehachse D1 drehbar an dem Grundkörper 25 gelagert ist, werden die Exzenter 26, 27 in synchroner Weise um die zugeordneten Drehachsen D3, D4 verdreht. Dadurch bewegen sich die Köpfe 260 der Exzenter 26, 27 in den zugeordneten Öffnungen 214 im Verstellkörper 210 der Klemmbacke 21. Dadurch, dass die Köpfe 260 exzentrisch zu den zugeordneten Drehachsen D3, D4 ausgebildet sind, wird auf diese Weise die Klemmbacke 21 entlang der Klemmrichtung K bewegt.

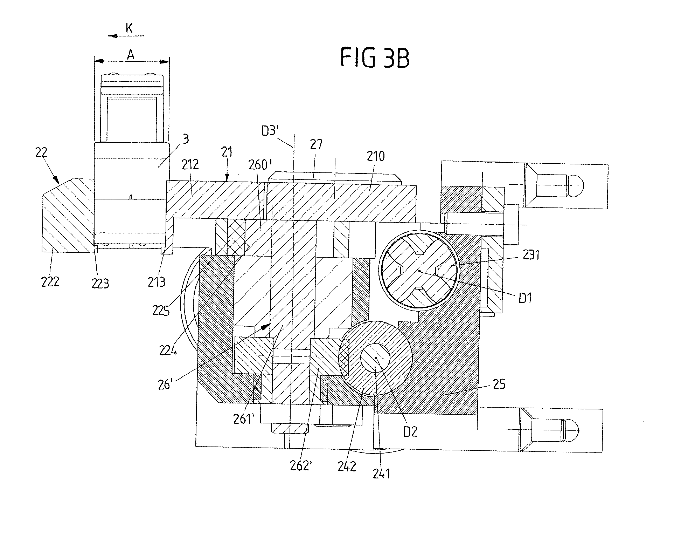

Eine zweite Antriebseinrichtung 24 ist der zweiten, äußeren Klemmbacke 22 zugeordnet. Die zweite Antriebseinrichtung 24 umfasst einen Antriebsmotor 240 in Form eines Elektromotors, der eine Antriebswelle 241 (siehe Fig. 3A und 3B) antreibt, die um eine Drehachse D2 an dem Grundkörper 25 drehbar gelagert ist. Die Antriebswelle 241 trägt eine Schnecke 242, die mit einem Getrieberad 262' in Form eines Schneckenrads eines Exzenters 26' (siehe Fig. 3B) in Eingriff steht, der um eine zugeordnete Drehachse D3' verdrehbar an dem Grundkörper 25 angeordnet ist. Der Exzenter 26' weist einen Schaft 261' auf, an dem ein exzentrischer Kopf 260' angeordnet ist, der in einer Öffnung 224 eines mit den Armen 220, 221 der zweiten Klemmbacke 22 verbundenen Verstellkörpers 225 der zweiten Klemmbacke 22 einliegt. Durch Verdrehen der Antriebswelle 241 um die zugeordnete Drehachse D2 kann der Exzenter 26' um seine Drehachse D3' relativ zum Grundkörper 25 verdreht werden, wodurch sich der Kopf 260' exzentrisch in der Öffnung 224 bewegt und dadurch die Klemmbacke 22 entlang der Klemmrichtung K bewegt wird.

Durch die Antriebseinrichtungen 23, 24 können die Klemmbacken 21, 22 unabhängig voneinander bewegt werden. Auf diese Weise kann der Abstand A zwischen den Klemmabschnitten 212, 222 der Klemmbacken 21, 22 verändert werden, um die Weite des Zwischenraums Z anzupassen und somit Werkstücke 3 mit unterschiedlichen Abmessungen an dem Werkstückträger 2 aufnehmen zu können.

Die Verstellbarkeit der Klemmbacken 21, 22 ermöglicht hierbei auch, ein Werkstück 3 lateral entlang der Klemmrichtung K zu bewegen, indem die Klemmbacken 21, 22 in die gleiche Verstellrichtung bewegt werden. Auf diese Weise kann die Lage des Werkstücks 3 an dem Werkstückträger 2 verändert werden.

Zudem ist auch möglich, durch Entfernung und Annäherung der Klemmbacken 21, 22 zueinander ein Werkstück 3 zu greifen und anschließend wieder loszulassen. So kann ein Werkstück 3 durch Annäherung der Klemmabschnitte 212, 222 entlang der Klemmrichtung K aneinander klemmend aufgenommen werden. Nach einem Transport des Werkstücks 3 können die Klemmbacken 21, 22 dann voneinander entfernt werden, so dass das Werkstück 3 beispielsweise durch Schwerkraftwirkung aus dem Werkstückträger 2 fällt. Zusätzliche Einrichtungen zum Einsetzen und zum Entnehmen des Werkstücks 3 können auf diese Weise gegebenenfalls entfallen.

Weil der Klemmabschnitt 212 der ersten, inneren Klemmbacke 21 elastisch federnd mit dem Verstellkörper 210 verbunden ist, ist jedoch auch möglich, ein Werkstück 3 durch eine geeignete Einsetzeinrichtung zwischen die Klemmbacken 21, 22 einzusetzen, ohne dass hierzu die Klemmbacken 21, 22 zueinander verfahren werden müssen. Bei einem Einsetzen eines Werkstücks 3 kann der Klemmabschnitt 212 der ersten, inneren Klemmbacke 21 entlang der Klemmrichtung K zumindest geringfügig ausweichen, so dass ein problemloses Einsetzen eines Werkstücks 3 möglich wird. Werden die Klemmbacken 21, 22 zum Einsetzen nicht verfahren, hat dies den Vorteil, dass ein Einsetzvorgang schnell durchgeführt werden kann.

In diesem Zusammenhang ist auch denkbar, nach einem Einsetzen eines Werkstücks 3 durch geregelte Positionierung der Klemmbacken 21, 22 zueinander eine Haltekraft genau einzustellen. Wird beispielsweise durch eine geeignete Sensorik festgestellt, dass die Haltekraft zum klemmenden Halten des Werkstücks 3 z.B. zu gering ist, so können die Klemmbacken 21, 22 einander angenähert werden, um auf diese Weise die Haltekraft in kontrollierter Weise zu erhöhen.

Wie aus Fig. 3A und 3B ersichtlich, weisen die Klemmabschnitte 212, 222 jeweils an einer unteren Kante einen Anschlagsteg 213, 223 auf, der einen Anschlag für ein zwischen die Klemmabschnitte 212, 222 eingesetztes Werkstück 3 bereitstellt und somit einen definierten Sitz des Werkstücks 3 zwischen den Klemmbacken 21, 22 schafft.

Bei dem dargestellten Ausführungsbeispiel sind, wie geschildert, die Antriebsmotoren 230, 240 der Antriebseinrichtungen 23, 24 jeweils über ein Verstellgetriebe mit den zugeordneten Exzentern 26, 27, 26' verbunden. Das Verstellgetriebe wird hierbei ausgebildet durch die Antriebswelle 231, 241, die daran angeordnete Schnecke 232, 242 und das mit der Schnecke 232, 242 in Eingriff stehende Schneckenrad 262, 262'. Der Eingriff der Schnecke 232, 242 mit dem zugeordneten Schneckenrad 262, 262' ist hierbei vorzugsweise selbsthemmend, so dass die Exzenter 26, 27, 26' zwar durch Verdrehen der Antriebswellen 231, 241 verstellt werden können, eine abtriebsseitige Kraftwirkung auf die Exzenter 26, 27, 26' aber nicht zu einem Rückstellen der Exzenter 26, 27, 26' führen kann. Die Klemmbacken 21, 22 werden somit auch im stromlosen Zustand der Antriebsmotoren 230, 240 in einer gerade eingestellten Position gehalten, ohne dass durch ein Werkstück 3 bewirkte Kräfte zwischen den Klemmbacken 21, 22 oder auf ein Werkstück 3 extern einwirkende Kräfte, beispielsweise bei einem Montagevorgang, zu einem Verstellen der Position der Klemmbacken 21, 22 führen können.

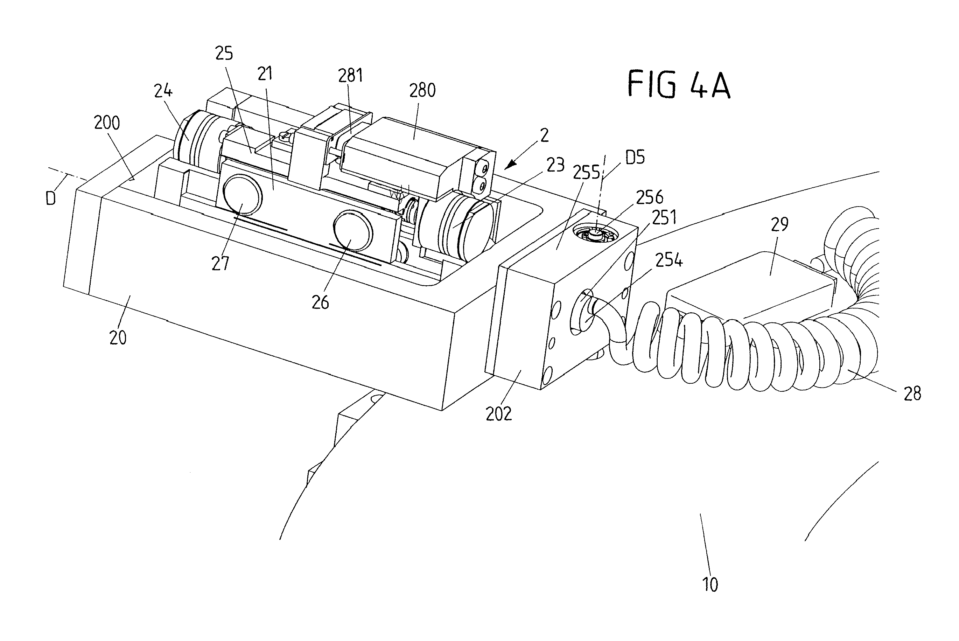

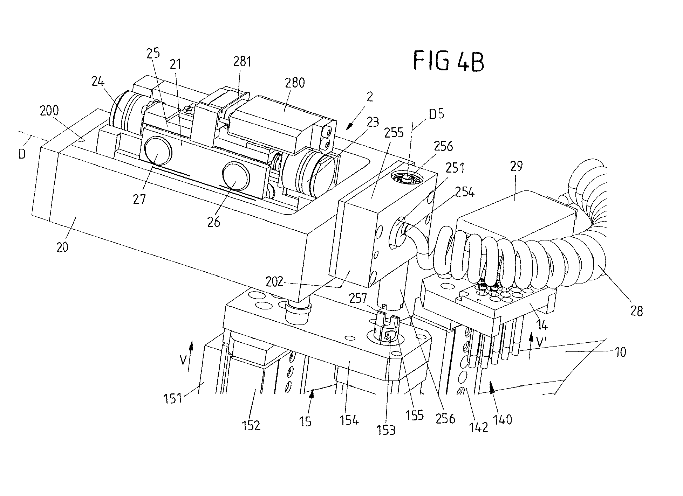

Bei dem Werkstückträger 2 sind die Klemmbacken 21, 22 motorisch zum Grundkörper 25 verstellbar. Zusätzlich ist auch der Grundkörper 25 um seine zugeordnete Drehachse D verdrehbar zu dem Rahmenteil 20, so dass der Grundkörper 25 mit den daran angeordneten Klemmbacken 21, 22 und einem gegebenenfalls an den Klemmbacken 21, 22 gehaltenen Werkstück 3 in unterschiedliche rotatorische Positionen gebracht werden kann. In Fig. 2A ist der Grundkörper 25 beispielsweise in einer ersten Drehstellung und in Fig. 2B in einer zweiten, zu der ersten Drehstellung um 180° um die Drehachse D verdrehten Drehstellung dargestellt. Fig. 4A und 4B wiederum zeigen den Grundkörper 25 in einer um 90° relativ zur ersten Drehstellung verdrehten, dritten Drehstellung.

Durch Lageveränderung des Grundkörpers 25 kann ein Zugriff beispielsweise auf eine Oberseite und eine Unterseite eines zwischen den Klemmbacken 21, 22 gehaltenen Werkstücks 3 ermöglicht werden. So kann in der Drehstellung des Grundkörpers 25 gemäß Fig. 2A beispielsweise von oben auf die Oberseite des Werkstücks 3 zugegriffen werden, während in der Drehstellung gemäß Fig. 2B die Unterseite des Werkstücks 3 zugänglich ist.

Das Verdrehen des Grundkörpers 25 erfolgt über die mit dem Grundkörper 25 verbundene Welle 251, die das Rahmenteil 20 nach außen hin durchgreift und in einem Gehäuse 202 außerhalb des Rahmenteils 20 ein Getrieberad 255 in Form eines Schneckenrads trägt. Das Getrieberad 255 steht in Eingriff mit einer Schnecke einer Verstellwelle 256, über die die Welle 251 verdreht werden kann.

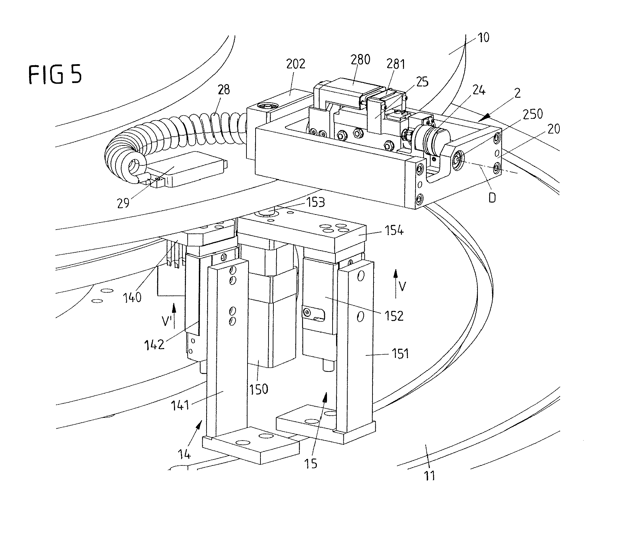

Während die Antriebsmotoren 230, 240 der Antriebseinrichtungen 23, 24 zum Verstellen der Klemmbacken 21, 22 an dem Grundkörper 25 und somit am Werkstückträger 2 selbst angeordnet sind, befindet sich eine Verstelleinrichtung 15 zum rotatorischen Verstellen des Grundkörpers 25 an der Basis 11 und ist somit relativ zu dem bewegbaren Transportelement 10 ortsfest angeordnet. Die Verstelleinrichtung 15 weist, wie beispielsweise aus Fig. 4B und Fig. 5 ersichtlich, eine Halterung 151 auf, über die ein Kopplungsantrieb 152 an der Basis 11 befestigt ist. Der Kopplungsantrieb 152 ist über eine Halteplatte 154 mit einem elektromotorischen Verstellantrieb 150 verbunden, der eine Abtriebswelle 153 antreibt.

Das Vorsehen einer solchen Verstelleinrichtung 15 an der Basis 11 basiert auf dem Gedanken, ein Verstellen des Grundkörpers 25 nur zu ermöglichen, wenn sich das Transportelement 10 in einer ganz bestimmten Stellung befindet, an der nämlich die Abtriebswelle 153 des Verstellantriebs 150 an der Basis 11 mit der Verstellwelle 256 am Werkstückträger 2 in Eingriff gebracht werden kann. Befindet sich das Transportelement 10 in einer (Dreh-)Stellung, in der die Verstellwelle 256 des Werkstückträgers 2 mit der Abtriebswelle 153 der Verstelleinrichtung 15 fluchtet, wie dies in Fig. 4B dargestellt ist, so kann durch Verstellen des Verstellantriebs 150 in eine Verstellrichtung V mittels des Kopplungsantriebs 152 die Abtriebswelle 153 mit endseitig daran angeordneten Kopplungszapfen 155 mit zugeordneten Aussparungen 257 der Verstellwelle 256 formschlüssig in Eingriff gebracht werden, so dass eine Drehbewegung der Abtriebswelle 153 auf die Verstellwelle 256 übertragen und darüber der Grundkörper 25 um seine Drehachse D verdreht werden kann. Ist der Grundkörper 25 in eine gewünschte Drehstellung gebracht worden, kann die Kopplung zwischen der Abtriebswelle 153 und der Verstellwelle 256 durch Verstellen des Verstellantriebs 150 entgegen der Verstellrichtung V wieder aufgehoben werden, so dass das Transportelement 10 weiter bewegt und der Werkstückträger 2 somit aus dem Bereich der Verstelleinrichtung 15 entfernt werden kann.

Das Vorsehen einer solchen ortsfesten, an der Basis 11 angeordneten Verstelleinrichtung 15 hat den Vorteil, dass nicht an jedem Werkstückträger 2 ein gesonderter Antrieb zum Verstellen des Grundkörpers 25 vorgesehen werden muss. Vielmehr kann eine ortsfeste Verstelleinrichtung 15 zum Verstellen sämtlicher an dem Transportelement 10 angeordneter Werkstückträger 2 dienen, indem durch Bewegen des Transportelements 10 die Werkstückträger 2 sukzessive die Verstelleinrichtung 15 anfahren, dort verstellt werden und sodann weiter bewegt werden.

Dadurch, dass die Antriebseinrichtungen 23, 24 mit ihren Antriebsmotoren 230, 240 unmittelbar an dem Grundkörper 25 des Werkstückträgers 2 angeordnet sind, ist erforderlich, ein Anschlusskabel 28 hin zum Grundkörper 25 zu verlegen, um eine elektrische Versorgung der Antriebsmotoren 230, 240 bereitzustellen und zudem gegebenenfalls eine Übertragung von Steuer- und/oder Sensorsignalen zu ermöglichen. Das Anschlusskabel 28 kann beispielsweise zwölfadrig sein und somit zwölf in dem Kabel enthaltene Übertragungsleitungen aufweisen.

Das nach Art eines Spiralkabels ausgebildete Anschlusskabel 28 ist an einem Ende mit einem Kontaktblock 29, der an dem Transportelement 10 festgelegt ist, und an einem anderen Ende mit einem Steckverbinder 280, der steckend mit einer Anschlussbuchse 281 am Grundkörper 25 verbunden ist, verbunden. Das Anschlusskabel 28 erstreckt sich zunächst von dem Kontaktblock 29 hin zu der Welle 251 und ist sodann in einem Führungskanal 254 der Welle 251 hin zu dem Grundkörper 25 geführt. Der Führungskanal 254 ist nach Art einer Nut in die Welle 251 eingeformt und ermöglicht, das Anschlusskabel 28 in geschützter Weise innerhalb der Welle 251 hin zu dem Grundkörper 25 zu verlegen.

Dadurch, dass das Anschlusskabel 28 zusammen mit der Welle 251 bei einem Verstellen des Grundkörpers 25 bewegt wird, wird das Anschlusskabel 28 bei einem Verdrehen des Grundkörpers 25 mit verdreht. Dies ist durch die Ausgestaltung des Spiralkabels ohne weiteres möglich, wobei ein übermäßiges Verdrehen des Anschlusskabels 28 in sich dadurch verhindert werden kann, dass der Grundkörper 25 nicht über einen vorbestimmten Winkel in die eine Richtung oder die andere Richtung hinaus bewegt wird, sondern eine Positionsänderung des Grundkörpers 25 durch Hin- und Rückbewegen des Grundkörpers 25, nicht aber durch wiederholtes Verdrehen ausschließlich in eine Richtung erfolgt.

Der Kontaktblock 29 ist an dem Transportelement 10 festgelegt. An der Basis 11 ist hierbei in ortsfester Weise eine elektrische Verbindungseinrichtung 14 angeordnet, die einen Kontaktblock 140 aufweist, der über einen Koppelantrieb 142 entlang einer Verstellrichtung V' verstellbar mit einer Halterung 141 verbunden und über die Halterung 141 an der Basis 11 gehalten ist.

Dies basiert, analog zum Vorsehen der mechanischen Verstelleinrichtung 15 zum mechanischen Verstellen des Grundkörpers 25, auf der Idee, eine elektrische Versorgung zum Verstellen der Klemmbacken 21, 22 zueinander nur in ganz bestimmten Stellungen des Transportelements 10 bereitzustellen, nämlich dann, wenn der Werkstückträger 2 sich in einer solchen Position befindet, dass der Kontaktblock 29 am Transportelement 10 mit dem Kontaktblock 140 der elektrischen Verbindungseinrichtung 14 an der Basis 11 fluchtet und die Kontaktblöcke 29, 140 somit kontaktierend miteinander in Eingriff gebracht werden können.

Befindet sich der Werkstückträger 2 in einer solchen Stellung, so wird der Kontaktblock 140 mittels des Kopplungsantriebs 142 in die Verstellrichtung V' verfahren und somit in kontaktierende Verbindung mit dem Kontaktblock 29 an dem Transportelement 10 gebracht, so dass die Antriebsmotoren 230, 240 zum Verstellen der Klemmbacken 21, 22 elektrisch versorgt werden können. Gleichzeitig können Signale über die Kontaktblöcke 29, 140 ausgetauscht werden, beispielsweise Encodersignale, die die aktuelle Drehposition der Antriebsmotoren 230, 240 anzeigen oder Steuersignale zum Betätigen der Antriebsmotoren 230, 240. Soll der Werkstückträger 2 durch Bewegen des Transportelements 10 weiterbewegt werden, so wird der Kontaktblock 140 durch Verstellen entgegen der Verstellrichtung V' von dem Kontaktblock 29 an dem Transportelement 10 entfernt und der Kontakt somit aufgehoben, so dass das Transportelement 10 weiterbewegt werden kann.

Eine elektrische Versorgung und eine Übertragung von Signalen ist somit nur in solch einer Stellung des Transportelements 10 möglich, in der der Kontaktblock 19 mit dem Kontaktblock 140 in Verbindung gebracht werden kann. Zum Verstellen der Klemmbacken 21, 22 wird der Werkstückträger 2 somit durch Bewegen des Transportelements 10 in eine geeignete Stellung verfahren, um eine elektrische Ankopplung an die Verbindungseinrichtung 14 vorzunehmen, und nach einem Verstellen der Klemmbacken 21, 22 wird der Werkstückträger 2 weiter verfahren. Auf diese Weise können mittels einer einzigen elektrischen Verbindungseinrichtung 14 alle an dem Transportelement 10 angeordneten Werkstückträger 2 sukzessive zum Verstellen der Klemmbacken 21, 22 bestromt werden.

An der Basis 11 können mehrere elektrische Verbindungseinrichtung 14 und/oder mehrere mechanische Verstelleinrichtungen 15 vorgesehen werden, so dass der Werkstückträger 2 in mehreren Stellungen des Transportelements 10 elektrisch versorgt und/oder zum Verstellen des Grundkörpers 25 mechanisch angekoppelt werden kann.

Der der Erfindung zugrunde liegende Gedanke ist nicht auf die vorangehend geschilderten Ausführungsbeispiele beschränkt, sondern lässt sich grundsätzlich auch bei ganz anders gearteten Ausführungsformen verwirklichen.

Es kann beispielsweise auch vorgesehen sein, nur eine der Klemmbacken motorisch verstellbar auszugestalten, während die andere fest mit dem Grundkörper verbunden ist. Dies vereinfacht den Aufbau des Werkstückträges, hat aber den Nachteil, dass eine Lageänderung eines Werkstücks an den Klemmbacken durch gleichgerichtetes Bewegen der Klemmbacken nicht möglich ist.

Bei dem dargestellten Ausführungsbeispiel ist das Rahmenteil des Werkstückträgers fest mit dem zugeordneten Transportelement der Montageanlage verbunden. Denkbar und möglich ist in diesem Zusammenhang, auch das Rahmenteil verstellbar zu dem Transportelement anzuordnen, um auf diese Weise ein mehrachsiges Verstellen eines an dem Werkstückträger gehaltenen Werkstücks zu ermöglichen.

### Bezugszeichenliste

- 1: Montageanlage
- 10: Transportelement (Transportelement)
- 100: Drehachse
- 11: Basis
- 12, 13: Montageeinrichtung
- 14: Elektrische Verbindungseinrichtung
- 140: Kontaktblock
- 141: Halterung
- 142: Verstellantrieb
- 15: Verstelleinrichtung
- 150: Verstellantrieb
- 151: Halterung
- 152: Koppelantrieb
- 153: Abtriebswelle
- 154: Halteplatte
- 155: Kopplungszapfen
- 2: Werkstückträger
- 20: Rahmenteil
- 200: Rahmenöffnung
- 201: Lagerstelle
- 202: Gehäuse
- 203: Lagerstelle
- 21: Klemmbacke
- 210: Verstellkörper
- 211: Federeinrichtung
- 212: Klemmabschnitt
- 213: Anschlagsteg
- 214: Öffnung
- 22: Klemmbacke
- 220, 221: Arm
- 222: Klemmabschnitt
- 223: Anschlagsteg
- 224: Öffnung
- 225: Verstellkörper
- 23: Antriebseinrichtung
- 230: Antriebsmotor
- 231: Antriebswelle
- 232: Getrieberad (Schnecke)
- 24: Antriebseinrichtung
- 240: Antriebsmotor
- 241: Antriebswelle
- 25: Grundkörper
- 250: Zapfen
- 251: Welle
- 252, 253: Lagerstelle
- 254: Führungskanal
- 255: Getrieberad (Schneckenrad)
- 256: Verstellwelle
- 257: Aufnahmeöffnung
- 26: Exzenter
- 260: Kopf
- 261: Schaft
- 262: Getrieberad (Schneckenrad)
- 27: Exzenter
- 28: Anschlusskabel
- 280: Steckverbinder
- 281: Anschlussbuchse
- 29: Kontaktblock
- 3: Werkstück
- A: Abstand
- D, D1-D5, D3': Drehachse
- K: Klemmrichtung
- S: Drehachse
- V, V': Verstellrichtung
- V1, V2: Verstellbewegung
- Z: Zwischenraum

## Patentansprüche

1. Werkstückträger zum Tragen eines Werkstücks, mit
- einem Grundkörper,
- zwei Klemmbacke, die jeweils einen Klemmabschnitt aufweisen, wobei die Klemmabschnitte der Klemmbacken entlang einer Klemmrichtung mit einem Abstand voneinander beabstandet sind und zwischen sich einen Zwischenraum ausbilden, in dem ein Werkstück zum Tragen an dem Werkstückträger anordbar ist,
**gekennzeichnet durch** mindestens eine Antriebseinrichtung (23, 24), die ausgebildet ist, mindestens eine der Klemmbacken (21, 22) motorisch entlang der Klemmrichtung (K) zum Einstellen des Abstands (A) zwischen den Klemmabschnitten (212, 222) zu verstellen.

2. Werkstückträger nach Anspruch 1, **gekennzeichnet durch** zwei Antriebseinrichtungen (23,24) zum motorischen Verstellen der zwei Klemmbacken (21, 22).

3. Werkstückträger nach Anspruch 1 oder 2, **dadurch gekennzeichnet, dass** die mindestens eine Antriebseinrichtung (23, 24) einen an dem Grundkörper (25) angeordneten Antriebsmotor (230, 240) aufweist.

4. Werkstückträger nach Anspruch 3, **dadurch gekennzeichnet, dass** der Antriebsmotor (230, 240) über ein Verstellgetriebe (231, 232, 241, 261, 262) mit einer der Klemmbacken (21, 22) gekoppelt ist.

5. Werkstückträger nach Anspruch 4, **dadurch gekennzeichnet, dass** das Verstellgetriebe (231, 232, 241, 261, 262) selbsthemmend ist.

6. Werkstückträger nach einem der Ansprüche 3 bis 5, **dadurch gekennzeichnet, dass** der Antriebsmotor (230, 240) über eine Antriebswelle (231, 241) mit einem drehbaren Exzenter (26, 27) gekoppelt ist, wobei durch Verdrehen des Exzenters (26, 27) die zugeordnete Klemmbacke (21, 22) entlang der Klemmrichtung (K) verstellbar ist.

7. Werkstückträger nach Anspruch 6, **dadurch gekennzeichnet, dass** die Antriebswelle (231, 241) mit zwei drehbaren Exzentern (26, 27) und über die zwei drehbaren Exzenter (26, 27) mit der zugeordneten Klemmback (21, 22) gekoppelt ist, wobei durch Verdrehen der zwei Exzenter (26, 27) die zugeordnete Klemmbacke (21, 22) entlang der Klemmrichtung (K) verstellbar ist.

8. Werkstückträger nach einem der vorangehenden Ansprüche, **dadurch gekennzeichnet, dass** zumindest eine der Klemmbacken (21, 22) einen Verstellkörper (210) und eine Federeinrichtung (211), über die der Klemmabschnitt (212, 222) elastisch federnd mit dem Verstellkörper (210) verbunden ist, aufweist.

9. Anlage, insbesondere Montageanlage, **gekennzeichnet durch** einen Werkstückträger (2) nach einem der vorangehenden Ansprüche und ein Transportelement (10), an dem der Werkstückträger (2) angeordnet ist, wobei das Transportelement (10) an einer feststehenden Basis (11) angeordnet und relativ zu der Basis (11) bewegbar ist.

10. Anlage nach Anspruch 9, **dadurch gekennzeichnet, dass** der Grundkörper (25) des Werkstückträgers (2) um eine erste Drehachse (D) relativ zu dem Transportelement (10) rotierbar ist.

11. Anlage nach Anspruch 10, **dadurch gekennzeichnet, dass** das Transportelement (10) um eine zweite Drehachse (S) zu der Basis drehbar ist, wobei die zweite Drehachse (S) quer zur ersten Drehachse (D) verläuft.

12. Anlage nach Anspruch 10 oder 11, **dadurch gekennzeichnet, dass** die Basis (11) eine Verstelleinrichtung (15) aufweist, die in mindestens einer vorbestimmten Stellung des Transportelements (10) mechanisch mit dem Grundkörper (25) gekoppelt und ausgebildet ist, den Grundkörper (25) motorisch um die erste Drehachse (D) zu verstellen.

13. Anlage nach Anspruch 12, **dadurch gekennzeichnet, dass** die Verstelleinrichtung (15) in anderen als der mindestens einen vorbestimmten Stellung nicht zum Verstellen des Grundkörpers (25) mit dem Grundkörper (25) gekoppelt ist.

14. Anlage, insbesondere Montageanlage, mit
- einer Basis,
- einem relativ zu der Basis bewegbaren Transportelement und
- einem an dem Transportelement angeordneten, relativ zum Transportelement verstellbaren Werkstückträger zum Tragen eines Werkstücks,
**dadurch gekennzeichnet, dass** die Basis (11) eine motorische Verstelleinrichtung (15) aufweist, die in mindestens einer vorbestimmten Stellung des Transportelements (10) mechanisch mit dem Werkstückträger (2) zum motorischen Verstellen des Werkstückträgers (2) gekoppelt ist, nicht aber in anderen als der mindestens einen vorbestimmten Stellung.

15. Anlage, insbesondere Montageanlage, mit
- einer Basis,
- einem relativ zu der Basis bewegbaren Transportelement und
- einer an dem Transportelement angeordneten elektrischen Einrichtung,
**dadurch gekennzeichnet, dass** die Basis (11) eine elektrische Verbindungseinrichtung (14) aufweist, die in mindestens einer vorbestimmten Stellung des Transportelements (10) mit der elektrischen Einrichtung (2) zur elektrischen Versorgung der elektrischen Einrichtung (2) und/oder zur Übertragung von Steuer- oder Sensorsignalen verbunden ist, nicht aber in anderen als der mindestens einen vorbestimmten Stellung.
